(19) **Europäisches Patentamt European Patent Office Office européen des brevets**

(11) **EP 4 006 003 B1**

(12) **EUROPEAN PATENT SPECIFICATION**

(45) Date of publication and mention
of the grant of the patent:
**21.08.2024 Bulletin 2024/34**

(21) Application number: **20210141.6**

(22) Date of filing: **26.11.2020**

(51) International Patent Classification (IPC):
*C05D 1/02* (2006.01)     *C05G 5/12* (2020.01)
*C05G 5/30* (2020.01)     *B01J 2/10* (2006.01)

(52) Cooperative Patent Classification (CPC):
(C-Sets available)
**C05D 1/02; C05G 5/12**     (Cont.)

(54) **CONTROLLED RELEASE POTASSIUM CHLORIDE FERTILIZER**

KALIUMCHLORIDDÜNGEMITTEL MIT KONTROLLIERTER FREISETZUNG

ENGRAIS À BASE DE CHLORURE DE POTASSIUM À LIBÉRATION CONTRÔLÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.06.2022 Bulletin 2022/22**

(73) Proprietor: **Everris International B.V.
6422 PD Heerlen (NL)**

(72) Inventors:
• **Peglrom, Pascalle Joseph Maria
7311 XA Apeldoorn (NL)**
• **Jennissen, Ronnie Andreas Marie
6114 JC Susteren (NL)**
• **Hernández Martínez, Jésus
4600 Visé (BE)**

(74) Representative: **Hoyng Rokh Monegier B.V.
Rembrandt Tower, 30th Floor
Amstelplein 1
1096 HA Amsterdam (NL)**

(56) References cited:
CN-A- 108 623 333     JP-A- 2004 217 434
US-A1- 2018 179 117

(52) Cooperative Patent Classification (CPC): (Cont.)

C-Sets
**C05D 1/02, C05G 5/36;**
**C05D 1/02, C05G 5/37**

**Description**

The invention relates to controlled release potassium chloride fertilizer.

BACKGROUND

The concept of controlled release fertilizers (CRFs) is well known in the art. These CRFs are typically manufactured by applying a coating to the substrate fertilizer to form a coated mixture and curing the coated mixture, i.e., forming a coated fertilizer with one layer of coating, in a reaction vessel such as a rotating drum or pan. Additional layers of coating may be applied by the same process, i.e., coating and curing in a reaction vessel.

For example, US Patent No. 3,223,518, discloses granular, particulate, or pelletized fertilizers encapsulated by a water-insoluble, non-hydroscopic organic resinous encapsulating coating. US Patent No. 3,285,223 discloses coating and encapsulating granular materials with a plurality of coatings with a specifically designed apparatus that provides heating, blowing, and rotating means in a single vessel.

US Patent Nos. 4,772,490 and 7,722,696 described resins that may be cured at room temperature. Specifically, the resin is a combination of polyol, cardol, cardanol, derivatives or oligomers thereof and polyisocyanate or isocyanate. The resin is cured or encapsulated onto the fertilizer by activation with an amine catalyst.

The granular fertilizers available in the market used as substrate for coating in order to create a CRF vary in composition, size and shape. These fertilizers are manufactured by different means for example: granulation, compaction, prilling or the like. The manufacturing method chosen depends on the nature of the fertilizer, the target market and the production cost.

The shape of the granular fertilizer has a big influence in their performance as substrate for coating to produce CRFs. A fertilizer substrate composed of perfectly spherical granules is preferred for CRFs since it allows to produce a layer with a homogenous thickness and, as a consequence, a homogeneous release. For example prilling or granulation of fertilizers can produce virtually spherical particles, which are very favourable for applying a thin homogeneous coating. Urea is a well-known fertilizer widely available as prilled or granulated product.

KCl has been available as prilled product but prilling KCl is relatively expensive. Hence, the most widely available KCl fertilizer is obtained from a compaction process. KCl after compaction is known to have very irregular shape. Yet, prilled KCl is relatively small, comprises pin-holes and a hollow core, which is disadvantageous for controlled release fertilizers, as this increases dissolution of the KCl.

The irregular shape of compacted KCl has a number of disadvantages. If the fertilizer is used as neat granules, the sharp edges are causing the formation of dust during transport and handling. In order to reduce the formation of dust during transportation and handling, it is not uncommon to apply a polishing step. Polishing of fertilizers (after compaction, for example) is a procedure either using a rotating drum in a so-called 'dry' process, or - more often - in a wet process where water is added, which dissolves sharp edges, and which is then evaporated. The latter process has the disadvantage that energy consumption is increased, but the dust in the product is reduced.

An application of this common polishing knowledge specifically to CRFs was described in CN101381263. This reference describes the use of a rotating barrel/drum polisher. This equipment is equivalent to the type of common use in the fertilizer manufacturing industry as described before. According to this reference, a polishing time of 45-60 minutes per batch is required.

Another example is the paper published by Lu et al. Sci Rep 10, 5763 (2020), where a water polishing pretreatment is described, resulting in increased sphericity (decreased the angle of repose). The result of increased sphericity is described to allow lower coating weights.

Both polishing methods described for CRFs are targeted to smoothen rough surfaces of already relatively spherical granules. There is with no mention to highly irregularly shaped, non-spherical, substrates

These state of the art polishing methods based in rotating drum equipment have not found a widespread application for improving the substrates to be coated to produce CRFs due to several issues. The first issue is generation of dust. A polishing action generates a certain amount of small particles and dust, while more dust is generated the more irregular the product is. Presence of dust in the substrate is considered detrimental for coating, yielding imperfections in the coating layer and loss of costly polymer on coating the small particles. The second issue is cost. A polishing step is an extra step in the process of making CRFs so to be efficient it needs to be made in an equipment involving low investment, low operating costs (avoiding use of water, heat etc.) and with as high throughput (or shorter batch time if not continuous) as possible. If possible, polishing is avoided by using more spherical products; however, for certain fertilizers, such products are not available, or too expensive.

There is, in consequence, a need to have of an efficient and cost effective method that can improve irregular fertilizers to be used as substrate for a controlled release fertilizer. It is furthermore a specific object of the invention to provide a process to polish irregular compacted KCl, such that good slow release properties are obtained with an amount of coating comparable to what is used for more spherical granules.

SUMMARY OF THE INVENTION

The present invention provides a process for producing a slow release fertilizer of KCL comprising the following steps:

a. providing compacted KCL, having a sphericity of below about 0.87;
b. dry polishing the KCl in an intensive mixer type device consisting of a container vessel and at least one set of agitating elements such that the KCL has a sphericity of between 0.88 and 0.94;
c. providing a coating on said polished KCl.

The agitating elements of the intensive mixer type device generally keep a certain gap between the rotating elements and the static elements. For example, the vessel can contain rotating elements on a central shaft, which have a certain gap with static elements on the vessel wall. The distance preferably is between about 1 mm and about 5 cm, preferably between about 5 mm and about 3 cm.

The agitating elements generally move at a certain circumferential tip speed. Preferably, the circumferential tip speed is about 0.3 m/s to about 5 m/s, more preferably about 1 m/s to 3 m/s.

The process is a dry process. Hence, no, or virtually no water is used.

Preferably, the compacted KCl has a d50 of between 2-4 mm, preferably between 2.5 mm and 3.5 mm. The d90 generally is below 5.5 mm, preferably below 5 mm. The d50 is the size of particles at which 50% of the weight of the particles is smaller, and 50% is higher than the d50 value. The d90 defines the size of the particles at which 10 wt% is larger, and 90 wt% is smaller than the stated size.

The process according the present invention allows an efficient and low-cost polishing step. Preferably, the polishing process step is done within 1 hr, preferably within 30 min, and it appeared possible to perform an effective process within 20 min, like for example about 10 min.

The present invention is also related to a coated and polished compacted potassium chloride controlled release fertilizer obtainable with the process according to the present invention. The coated and polished granular fertilizer has a release profile which can be slower than non-polished compacted KCl, prilled KCl or dry-drum polished compacted KCl, and has the following characteristics: lower release at day one, and a more gradual, slower, increase in the first weeks.

The present invention is also related to a coated and polished compacted potassium chloride controlled release fertilizer wherein the KCl has a sphericity between 0.88 and 0.92, and shows, with 6 pph (parts per hundred) (6 parts by weight coating on solid basis relative to 100 parts by weight potassium chloride particles), a release of less than 18%, preferably about 15% or less, at day 7 in a standard test at 21 °C.

Preferably, the coated and polished granular KCl according to the invention has a d50 of between 3-4 mm and a d90 below 5.5 mm.

The invention furthermore relates to the use of an intensive mixer type device consisting of a container vessel and at least one set of agitating elements rotating relative to static elements in said vessel, in the treatment of granular material prior to its coating to create a controlled release granular material.

DESCRIPTION OF THE FIGURES

Fig 1 are photographs of untreated compacted KCl and dry-polished compacted KCl according to the present invention.

Fig 2 is a graph representing several release profiles of coated KCl products.

DETAILED DESCRIPTION OF THE INVENTION

Generally, compacted KCL has a sphericity of below 0.87, like for example about 0.86. Such a substrate reflects common irregular (not spherical) shape of compacted (also called compacted and granulated) KCl, similarly to commercially available KCl for agriculture. Other fertilizer products are available in much more spherical shape, see for example the following table.

| Fertilizer | Manufacturing method | Sphericity (SPHT at 50%Q3) |
| --- | --- | --- |
| KCl | Prilled | 0.966 |
| Urea | Prilled | 0.980 |

(continued)

| Fertilizer | Manufacturing method | Sphericity (SPHT at 50%Q3) |
|---|---|---|
| NPK (21-7-14) | Prilled | 0.973 |
| Urea | Granulated | 0.958 |
| MAP | Granulated | 0.952 |
| NPK (17-10-13) | Granulated | 0.966 |
| SOP (Potassium Sulphate) | Granulated | 0.967 |
| KCl | Compacted | 0.860 |

A sphericity of higher than 0.9 generally allows good release properties, and generally little polishing is necessary. However, with compacted KCI, it appears more difficult to achieve a good release profile. Hence dry polishing or wet polishing, both using a standard drum, can be applied. The sphericity of several KCI reference products, and the release properties are given in the below table:

| Sample | Pre-treatment time (min) | Sphericity (SPHT at 50% Q3) | Release 30d (%K2O) (6pph) |
|---|---|---|---|
| Prilled KCL | | 0.966 | 44 |
| Standard KCl | 0 | 0.863 | 68 |
| Dry drum polished | 150 | 0.877 | 48 |
| Water drum polished | 130 | 0.90 | 43 |

The standard KCl and the dry-drum polished in a standard drum showed fast initial release, and a very flat release profile after about 10-15 days.

The release of unpolished compacted KCl clearly is quite unacceptable. The dry polishing of standard drum-treated KCL takes relatively long (more than 2 hours), and the release of the coated granules is not really up to standard even though a reasonable sphericity is achieved. The wet polished KCI shows better release properties after standard coating, but the treatment is long, and the evaporation of water is relatively costly because of energy usage.

The present invention allows polishing in relatively short time, with low energy input, while coating at low amount results in a release profile which is even improved in comparison to coated prilled KCI with the same coating weight (for example 6 pph).

According to the invention, common compacted and granulated KCI can be used. Compacted and granulated KCI is also simply called compacted KCI. Common KCI comprises an amount of KCI of at least 90%, preferably about 95% or more. Other components generally are sodium chloride (2-3 wt%) and other impurities. The amount of water generally is less than 0.5 wt%, like for example 0.2 wt%.

Compacted potassium chloride (KCI) generally has a d50 of between 2-4 mm, preferably between 2.5 mm and 3.5 mm. The d90 generally is below 5.5 mm, preferably below 5 mm

Compacted KCI generally has a sphericity of below 0.87, like for example between 0.85 and 0.87, like about 0.86.

Substrate fertilizer morphology and particle size distribution of the products can be analyzed by Particle Size and Particle Shape Analysis with Dynamic Image Analysis, by a RETSCH Camsizer. The main morphology parameter used to evaluate the substrate fertilizer is sphericity (SPHT), defined as:

$$\text{SPHT} \ = 4 \ \frac{\pi A}{P^2}$$

Where P is the measured perimeter of a particle projection and A is the area covered by a particle projection. For an ideal sphere SPHT =1. The higher the sphericity the rounder the granule and the better the CRF made with that substrate will be. The parameter measured is sphericity at D50. named SPHT3 at Q3[%]50 in the software of the RETSCH Camsizer equipment used.

The polishing device consists in a vessel in which the material to be treated is contained, in which rotational elements in movement relative to static elements in the vessel impart energy to the bed of material providing for mixing. For example, the vessel can contain rotating elements on a central shaft, which have a certain gap with static elements on the vessel wall. Also, the vessel shell having agitating elements can rotate, while static elements are attached to a central shaft of the intensive mixer.

The rotational and static elements can be, but are not restricted to, paddles, blades, ribbons and pins. The rotational and static elements are attached to one or more shafts or axels, or to the inner side of the vessel shell.

The rotating elements keep a certain gap distance between them and the static elements in order to avoid excessive crushing of the granules and at the same time are operated at a high enough tip circumferential speed in order to provide enough polishing effect. The distance generally is about 1 mm or more, but preferably is about the d90 or more, like for example about 5 mm or more. Generally, the distance is about 5 cm or less, as otherwise lower efficiency is achieved. Preferably, the distance is about 3 cm or less. A suitable distance is for example 8 mm, 1 cm, 1.5 cm or 2 cm.

Tip circumferential speed is the speed of the blade tip, which is the closest point of the mixing element to the wall or the furthest point from the rotation axis. The tip speed generally is between 0.3 and 5 m/s. A relatively low tip speed may cause an increase in treatment time and more dust generation and is, therefore, less preferred. Therefore, a tip speed of about 1 m/s or more is preferred. A to high tip speed may cause high energy input, and a tip speed of about 3 m/s is preferred.

The effect of the polishing pretreatment according to the invention is not only to remove the sharp edges of the granules but also at the same time to incorporate part of the dust generated by the friction into the crevasses of the granule surface, providing a superior substrate for being coated into a controlled release fertilizer.

The device can be operated batch-wise or continuously. Due to the short residence time needed for polishing the equipment can be incorporated upstream of a fertilizer coating line without affecting negatively its throughput.

In a batch-type process, at an industrial scale, the device can handle at least one ton or more per batch, preferably 2 ton or more, like for example 3, 4 or 5 ton per batch.

The potassium chloride after polishing has a sphericity of 0.88 or higher. Generally, the sphericity is about 0.92 or lower, and preferably about 0.9 or lower. More preferably, the sphericity is between 0.88 and 0.90, and even more preferably between 0.88 and 0.89, as such sphericity can suffice to provide proper release properties of the controlled release fertilizer. As explained above, the presence of the small dust particles in the (small) cavities of the potassium chloride granules is thought to be instrumental in achieving such advantageous release profile.

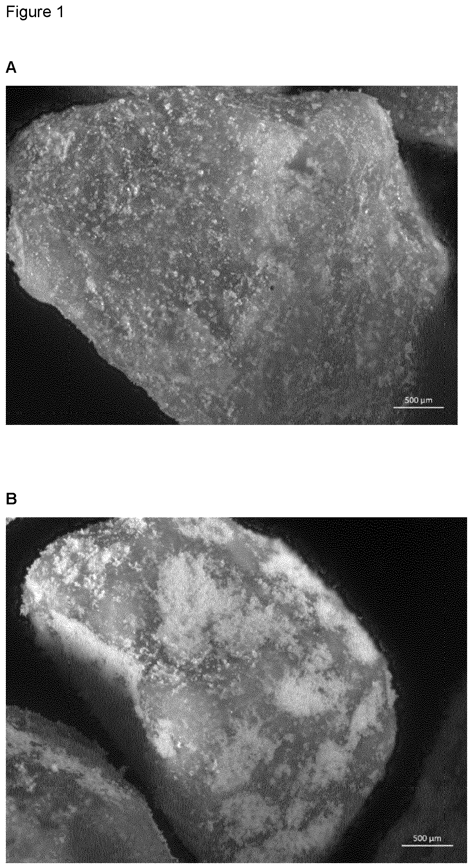

The presence of small dust particles can also be observed on microscopy photographs, as shown in Figure 1. Figure 1A is a photograph of unpolished compacted KCl, while Figure 1B shown a picture of blender polished compacted KCl according to the present invention. On figure 1B white patches of dust are visibly incorporated on the surface. The dust integrated in the surface of the granule of the polished material is thought to provide the surprising increased performance. The invention thus also relates to polished, compacted KCl granules, ready for coating, having a sphericity of between 0.88 and 0.92, and having visible dust patches under a microscope at 15x magnification.

The polymer coating step can be a conventional coating step. The amount of polymer coating is determined by the required performance. More coating is needed to make the controlled release of fertilizer last for longer (longer longevity) which is needed for certain applications. However, more coating means more cost. Typically, the amount of polymer coating is about 6 pph (parts per hundred) (6 parts by weight coating on solid basis relative to 100 parts by weight potassium chloride particles) for a longevity of around 6-7 months. However, other amounts can be applied as well providing different longevities for different applications. For example, the coating can be applied in an amount of 3 - 10 pph.

Other types of coatings, like the ones based in elemental sulfur, will also benefit from the use of such polished material. The typical coating weights of sulfur coating are considerable higher than polymer coating. Typically about 15-25 pph or even higher are applied, like up to 50 pph, since the performance of sulfur as barrier is inferior that that of polymer coatings but also since cost is not an issue due to the low cost of elemental sulfur.

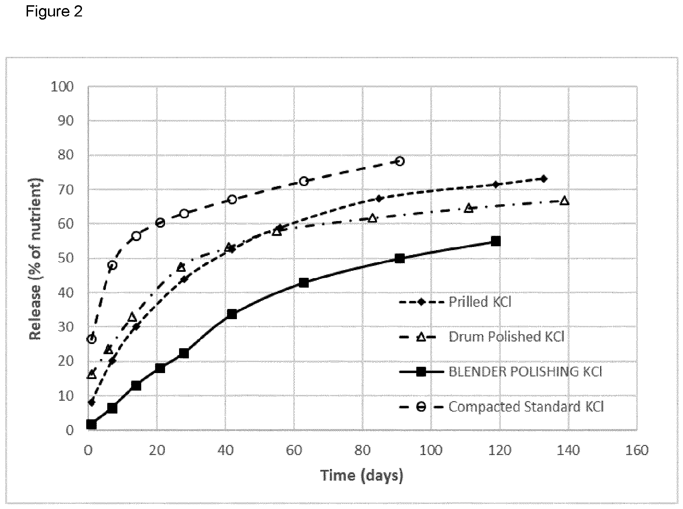

Figure 2 shows a comparison of the release in water leach test of different KCl fertilizer, non-polished (prilled or compacted) and polished by different methods. The products were all coated with 6 pph of PU polymer coating. As is apparent from the graphs, unpolished compacted and coated KCl ('compacted standard KCl') shows a release of KCl in a standard test (as described below in the experimental section) of about 50% in about 10 days. After about 20 days, the release is relatively slow, leading to about 65% release at 30 days, and 70% release at 50 days. Prilled and coated KCl ('prilled KCl'), just like standard drum polished KCl ('drum polished KCl') shows about 30% release at 10 days, about 50% at 30 days and 55% release at 50 days. The KCl polished according to the present invention ('BLENDER POLISHING KCl') shows only 10% release at 10 days, about 25% at 30 days, and about 40% at 50 days. The graphs show that the polished KCl according to the present invention allows a controlled release fertilizer with improved controlled release over prior art type of products.

The preferred controlled release fertilizer according to the present invention shows a release at 7 days of about 18 % or less, preferably about 15 wt% or less. As explained above, the first week release is quite indicative for the controlled release behavior, and slow initial release is considered important.

The preferred controlled release compacted KCl fertilizer according to the present invention preferably shows a release at 10 days of about 20% or less, preferably about 15% or less; and/or a release at 30 days of 40% or less, preferably of 35% or less; and/or a release at 50 days of 50% or less, preferably 45% or less. Even more preferably, at 20 days, the release is about 30% or less. Even more preferably, the KCl fertilizer conforms with the release percentages as described above at all time points.

EXAMPLES:

**Materials and Methods**

The KCl used in the examples is granular KCl, from ICL (Iberpotash). Composition is: 95% KCl, 2.3% NaCl, 0.2% $H_2O$ (moisture). Bulk density is 1 ton/$m^3$. The particle size distribution of the material is shown in the table below.

| Particle size diameter range (mm) | | Cumulative Weight percentage [%] |
|---|---|---|
| 0 | 2 | 2.1 |
| 2 | 3 | 19.2 |
| 3 | 4 | 64.3 |
| 4 | 5 | 95.2 |
| 5 | 6 | 99.9 |
| 6 | 7 | 100 |

Maximum diameter is defined as the d90 which is the diameter under which 90% of the weight of the sample is contained. In this case d90 is 4.71 mm.

The device used for the pretreatment according to the invention is a paddle mixer it has approximately 300 liters working capacity (approximately 50 cm diameter and 150 cm length). It is equipped control panel with frequency inverter for speed control of the blade. It has a single shaft with 12 arms mounted perpendicularly to it, finished by adjustable blades. Distance from edge of blade to the wall is adjustable on a range of 1 to 30 mm.

CRFs were prepared using the fertilizer pretreated in the mixing device to compare their performance. The CRFs prepared in these examples were coated with a polyurethane based resin made by reacting a liquid polyol and a liquid diisocyanate similarly as described in U.S. Patent No. 7,722,696. The coating level for all examples is 6 parts of solid coating per 100 of fertilizer (6 pph). Samples are prepared in a rotating drum holding 1.5 kg of fertilizer and equipped with a heating system to keep fertilizer at a temperature between 60 C and 80 C.

**Analysis**

Dust amount was determined by sieving a representative sample over a standardized sieve of 2.36 mm opening. All material going through the sieve (<2.36mm) is considered to be dust and needs to be removed prior to coating. This dust is, then, considered waste and needs to be limited.

$$\text{Dust amount (\%)} = 100 * \frac{\text{Weight of particles} < 2.36\text{mm in sample (g)}}{\text{Weight of total sample (g)}}$$

Substrate fertilizer morphology and particle size distribution of the fraction >2,36 mm were analyzed by Particle Size and Particle Shape Analysis with Dynamic Image Analysis by a RETSCH Camsizer. The main morphology parameter used to evaluate the substrate fertilizer is sphericity (SPHT), defined as:

$$\text{SPHT} = 4 \frac{\pi A}{P^2}$$

Where P is the measured perimeter of a particle projection and A is the area covered by a particle projection. For an ideal sphere SPHT =1. The higher the sphericity the rounder the granule and the better the CRF made with that substrate will be. The parameter measured is the value of sphericity at D50, mentioned as SPHT3 at Q3[%]50 in the software of the Camsizer equipment.

The performance of the coated fertilizer was measured by the rate of nutrient release from the granule when contacted with water. Slower release rates indicate longer longevity of the product in terms of releasing its nutrients over time. The industry standards for determining the release characteristics of the product include the water leach release test.

In the water leach release test, CRFs produced were placed in water at 21°C and tested at different time intervals, 24 hours, 7 days and, in some cases, longer times (for example for preparing Fig 2). In particular, twenty grams of coated fertilizer was placed into a flask with 400 mL of de-mineralized water. The flask containing the sample was inverted three times to allow for mixing and kept at 21°C. After a 24 hour period, the flask was inverted three times and a sample was taken to determine the amount of nutrients ($K_2O$) in the water. The water was replaced and renewed with 400 mL of fresh de-mineralized water. The measurement was repeated again after 7 days. Extra measurement points can be obtained to be able to plot the release profile during the working time of the controlled release fertilizer. After the last measurement, the remaining particles were milled, dissolved to a known volume and analyzed to check closure of the mass balance for each component. Results are given as weight % of nutrient $K_2O$ released into the solution at different times intervals.

**Examples with different gaps to the wall.**

Settings: Load 300kg, Time 30min, Circumferential speed 1.64 m/s (70Hz), Coating level: 6 pph (parts of coating per hundred of fertilizer)

| Gap to wall (mm) | Dust Amount (%) | Sphericity (SPHT at 50%Q3) | Release at 1d (%K2O) lab scale coating | Release at 7d (%K2O) lab scale coating |
|---|---|---|---|---|
| untreated | 4.3 | 0.861 | 27 | 48 |
| 1 | 8.3 | 0.886 | 9.9 | 19.7 |
| 5 | 7.1 | 0.887 | 8.4 | 17.7 |
| 15 | 6.4 | 0.882 | 2.7 | 10.3 |
| 30 | 6.1 | 0.884 | 1.8 | 6.5 |

**Examples with different speeds**

Settings: Load 300kg, Time 30min, Gap to wall 30mm, Coating level: 6 pph (parts of coating per hundred of fertilizer)

| Circumferential Tip Speed (m/s) | Dust Amount (%) | Sphericity (SPHT at 50%Q3) | Release at 1d (%K2O) lab scale coating | Release at 7d (%K2O) lab scale coating |
|---|---|---|---|---|
| untreated | 4.3 | 0.861 | 27 | 48 |
| 0.82 (35Hz) | 7.5 | 0.876 | 26 | 38 |
| 1.17 (50Hz) | 6.4 | 0.881 | 6 | 21 |
| 1.64 (70Hz) | 6.3 | 0.884 | 2 | 7 |

**Comparative treated vs untreated**

Settings Polishing: Load 300kg, Time 30min, Gap to wall 30mm, Circumferential speed 1.64 m/s (70Hz)

Coating Weight: 6 pph (parts of coating per hundred of fertilizer)

| | Dust Amount (%) | Sphericity (SPHT at 50%Q3) | Release at 1d (%K2O) lab scale coating | Release at 7d (%K2O) lab scale coating |
|---|---|---|---|---|
| untreated | 4.3 | 0.861 | 27 | 48 |
| polished | 6.3 | 0.884 | 2 | 7 |

*Comparative treated vs treated cleaned*

Polishing generates a fine dust which is stuck on the fertilizer. In general the presence of dust is seen as detrimental for coating. Dust was removed on the untreated and polished fertilizer by a hexane washing treatment and performance compared.

Settings Polishing: Load 300kg, Time 30min, Gap to wall 30mm, Circumferential speed 1.64 m/s (70Hz); Coating Weight: 6 pph (parts of coating per hundred of fertilizer)

| Release Increase by Washing | At 1day | At 7 days |
|---|---|---|
| Untreated | 14% | 6% |
| Polished | 106% | 154% |

On the untreated sample the performance remained largely the same while on the polished sample the dust free sample performed, surprisingly, considerably worse. This suggests that the presence of the dust generated by this novel dry polishing process is beneficial to the coating. Traditional drum polishing and water polishing known in the art used for CRFs will not present this beneficial dust.

## Claims

1.   Process for producing a controlled release fertilizer of potassium chloride comprising the following steps:

    a. providing compacted KCl, having a sphericity of below 0.87;
    b. dry polishing the KCl in an intensive mixer type device consisting of a container vessel and at least one set of agitating elements rotating relative to static elements in said vessel such that the KCl has a sphericity of between 0.88 and 0.92;
    c. providing a coating on said polished KCl;

    wherein sphericity (SPHT) is measured with a RETSCH Camsizer apparatus and is defined as

$$\mathrm{SPHT} = 4\,\frac{\pi A}{P^2}$$

    where p is the measured perimeter of a particle projection and A is the area covered by a particle projection.

2.   Process according to claim 1, wherein the agitating elements keep a certain gap between them and the static elements, wherein the distance is between 1 mm and 5 cm, preferably between 5 mm and 3 cm.

3.   Process according to any one of claims 1-2, wherein the agitating elements move at a certain circumferential tip speed, wherein the circumferential tip speed is between 0.3 and 5 m/s, preferably between 1 m/s and 3 m/s.

4.   Process according to any one of claims 1-3, wherein the agitating elements are rotating on a central shaft, and wherein the static elements are parts of the inside of the vessel wall.

5. Process according to any one of claims 1-4, wherein the compacted KCl has a d50 of between 2-4 mm, preferably between 2.5 mm and 3.5 mm and a d90 of below 5.5 mm, preferably below 5 mm

6. Process according to any one of claims 1-5, wherein the polishing process step is done within 1 hr, preferably within 30 min, and even more preferably within 20 min.

7. Process according to any one of claims 1-6, wherein the coating is a polymer coating applied in an amount of 3 pph to 10 pph, preferably between 4 pph to 7 pph on polished KCl.

8. Process according to any one of claims 1-6, wherein the coating is a sulphur coating applied in an amount of 15 pph to 50 pph, preferably between 15 pph to 25 pph coating on polished KCl

9. Polished compacted KCl granules, ready for coating, having a sphericity of between 0.88 and 0.92, and having visible dust patches under a microscope at 15x magnification.

10. Polished and coated granular material obtainable with the process according to any one of claims 1-8.

11. Coated and polished KCl material according to claim 10, having a coating in an amount of 6 pph or less and a release of about 18% or less at 7 days measured with a water leach test at 21 °C, preferably about 15% or less, wherein the water leach test is performed as described in the description.

12. Coated and polished compacted KCl having a sphericity between 0.88 and 0.92 and having an amount of coating of 6 pph or less and a release of about 18% or less at day 7 measured with a water leach test at 21 C, preferably about 15% or less, wherein the water leach test is performed as described in the description.

13. Coated and polished compacted KCl according claim 12, having one or more of the following release properties: a release at 10 days of about 20% or less, preferably about 15% or less; and/or a release at 30 days of 40% or less, preferably of 35% or less; and/or a release at 50 days of 50% or less, preferably 45% or less.

14. Coated and polished compacted KCl according to any one of claims 10-13, wherein the coated and polished compacted KCl has an d50 of between 3-4 mm and a d90 below 5.5 mm.

15. Use of an intensive mixer type device consisting of a container vessel and at least one set of agitating elements rotating relative to static elements in said vessel, for dry polishing of granular material of KCl, wherein the granular material has a sphericity of below 0.87 prior to polishing and a sphericity of between 0.88 and 0.92 after polishing wherein sphericity (SPHT) is measured with a RETSCH Camsizer apparatus and is defined as

$$\text{SPHT} = 4\frac{\pi A}{P^2}$$

where p is the measured perimeter of a particle projection and A is the area covered by a particle projection.

**Patentansprüche**

1. Prozess zur Herstellung eines Düngemittels mit kontrollierter Freisetzung von Kaliumchlorid, umfassend die folgenden Schritte:

   a. Bereitstellen von verdichtetem KCl, das eine Sphärizität von unter 0,87 aufweist;
   b. Trockenpolieren der KCl in einer Vorrichtung vom Typ Intensivmischer, die aus einem Behälter und mindestens einem Satz von Rührelementen besteht, die sich relativ zu statischen Elementen in dem Behälter drehen, sodass die KCl eine Sphärizität zwischen 0,88 und 0,92 aufweist;
   c. Bereitstellen einer Beschichtung auf dem polierten KCl;
   wobei die Sphärizität (SPHT) mit einem RETSCH Camsizer Gerät gemessen wird und definiert ist als

$$SPHT = 4\frac{\pi A}{p^2}$$

wobei p der gemessene Umfang einer Partikelprojektion und A die von einer Partikelprojektion abgedeckte Fläche ist.

2. Prozess nach Anspruch 1, wobei die Rührelemente einen bestimmten Abstand zwischen ihnen und den statischen Elementen einhalten, wobei der Abstand zwischen 1 mm und 5 cm, vorzugsweise zwischen 5 mm und 3 cm, liegt.

3. Prozess nach einem der Ansprüche 1-2, wobei sich die Rührelemente mit einer bestimmten Umfangsgeschwindigkeit der Spitzen bewegen, wobei die Umfangsgeschwindigkeit der Spitzen zwischen 0,3 und 5 m/s, vorzugsweise zwischen 1 m/s und 3 m/s liegt.

4. Prozess nach einem der Ansprüche 1-3, wobei die Rührelemente auf einer zentralen Welle rotieren und wobei die statischen Elemente Teile der Innenseite der Behälterwand sind.

5. Prozess nach einem der Ansprüche 1-4, wobei das verdichtete KCl einen d50-Wert zwischen 2-4 mm, vorzugsweise zwischen 2,5 mm und 3,5 mm und einen d90-Wert von unter 5,5 mm, vorzugsweise unter 5 mm, aufweist.

6. Prozess nach einem der Ansprüche 1-5, wobei der Schritt des Polierens innerhalb von 1 Stunde, vorzugsweise innerhalb von 30 Minuten und noch bevorzugter innerhalb von 20 Minuten durchgeführt wird.

7. Prozess nach einem der Ansprüche 1-6, wobei die Beschichtung eine Polymerbeschichtung ist, die in einer Menge von 3 pph bis 10 pph, vorzugsweise zwischen 4 pph und 7 pph auf poliertes KCl aufgetragen wird.

8. Prozess nach einem der Ansprüche 1-6, wobei die Beschichtung eine Schwefelbeschichtung ist, die in einer Menge von 15 pph bis 50 pph, vorzugsweise zwischen 15 pph und 25 pph, auf poliertes KCl aufgetragen wird.

9. Poliertes, verdichtetes KCl-Granulat, bereit für die Beschichtung, mit einer Sphärizität zwischen 0,88 und 0,92 und mit sichtbaren Staubflecken unter dem Mikroskop bei 15-facher Vergrößerung.

10. Poliertes und beschichtetes körniges Material, erhältlich mit dem Prozess nach einem der Ansprüche 1-8.

11. Beschichtetes und poliertes KCl-Material nach Anspruch 10, mit einer Beschichtung in einer Menge von 6 pph oder weniger und einer Freisetzung von etwa 18 % oder weniger nach 7 Tagen, gemessen mit einem Wasserauslaugungstest bei 21 °C, vorzugsweise etwa 15 % oder weniger, wobei der Wasserauslaugungstest wie in der Beschreibung beschrieben durchgeführt wird.

12. Beschichtetes und poliertes verdichtetes KCl mit einer Sphärizität zwischen 0,88 und 0,92 und mit einer Beschichtungsmenge von 6 pph oder weniger und einer Freisetzung von etwa 18 % oder weniger an Tag 7, gemessen mit einem Wasserauslaugungstest bei 21 °C, vorzugsweise etwa 15 % oder weniger, wobei der Wasserauslaugungstest wie in der Beschreibung beschrieben durchgeführt wird.

13. Beschichtetes und poliertes verdichtetes KCl nach Anspruch 12, das eine oder mehrere der folgenden Freisetzungseigenschaften aufweist: eine Freisetzung nach 10 Tagen von etwa 20 % oder weniger, vorzugsweise etwa 15 % oder weniger; und/oder eine Freisetzung nach 30 Tagen von 40 % oder weniger, vorzugsweise von 35 % oder weniger; und/oder eine Freisetzung nach 50 Tagen von 50 % oder weniger, vorzugsweise 45 % oder weniger.

14. Beschichtetes und poliertes verdichtetes KCl nach einem der Ansprüche 10-13, wobei das beschichtete und polierte verdichtete KCl einen d50-Wert zwischen 3 und 4 mm und einen d90-Wert unter 5,5 mm aufweist.

15. Verwendung einer Vorrichtung vom Typ Intensivmischer, bestehend aus einem Behälter und mindestens einem Satz von Rührelementen, die sich relativ zu statischen Elementen in dem Behälter drehen, zum Trockenpolieren von körnigem KCl-Material, wobei das körnige Material vor dem Polieren eine Sphärizität von unter 0,87 und nach dem Polieren eine Sphärizität zwischen 0,88 und 0,92 aufweist, wobei die Sphärizität (SPHT) mit einem RETSCH Camsizer Gerät gemessen wird und definiert ist als

$$SPHT = 4\frac{\pi A}{p^2}$$

wobei p der gemessene Umfang einer Partikelprojektion und A die von einer Partikelprojektion abgedeckte Fläche ist.

**Revendications**

1. Procédé de production d'un engrais à diffusion lente de chlorure de potassium comprenant les étapes suivantes :

   a. la fourniture du KCl compacté, ayant une sphéricité inférieure à 0,87 ;
   b. le polissage à sec du KCl dans un dispositif de type mélangeur intensif constitué d'un récipient et d'au moins un ensemble d'éléments agitateurs tournant par rapport à des éléments statiques dans ledit récipient, de sorte que le KCl a une sphéricité comprise entre 0,88 et 0,92 ;
   c. l'application d'un enrobage sur ledit KCl poli ;
   dans lequel la sphéricité (SPHT) est mesurée à l'aide d'un appareil RETSCH Camsizer et est définie comme

   $$SPHT = 4\frac{\pi A}{p^2}$$

   où p est le périmètre mesuré d'une projection de particules et A est la zone couverte par une projection de particules.

2. Procédé selon la revendication 1, dans lequel les éléments agitateurs maintiennent un certain écart entre eux et les éléments statiques, dans lequel l'écart est compris entre 1 mm et 5 cm, de préférence entre 5 mm et 3 cm.

3. Procédé selon l'une quelconque des revendications 1 à 2, dans lequel les éléments agitateurs se déplacent à une certaine vitesse en bout circonférentielle, dans lequel la vitesse en bout circonférentielle est comprise entre 0,3 et 5 m/s, de préférence entre 1 m/s et 3 m/s.

4. Procédé selon l'une quelconque des revendications 1 à 3, dans lequel les éléments agitateurs tournent autour d'un arbre central, et dans lequel les éléments statiques font partie de l'intérieur de la paroi du récipient.

5. Procédé selon l'une quelconque des revendications 1 à 4, dans lequel le KCl compacté a un d50 compris entre 2 et 4 mm, de préférence entre 2,5 et 3,5 mm, et un d90 inférieur à 5,5 mm, de préférence inférieur à 5 mm.

6. Procédé selon l'une quelconque des revendications 1 à 5, dans lequel l'étape de polissage est réalisée en 1 heure, de préférence en 30 minutes, et de préférence encore en 20 minutes.

7. Procédé selon l'une quelconque des revendications 1 à 6, dans lequel l'enrobage est un enrobage polymère appliqué dans une quantité de 3 pph à 10 pph, de préférence entre 4 pph et 7 pph sur le KCl poli.

8. Procédé selon l'une quelconque des revendications 1 à 6, dans lequel l'enrobage est un enrobage de soufre appliqué dans une quantité de 15 pph à 50 pph, de préférence entre 15 pph et 25 pph sur le KCl poli.

9. Granulés de KCl compactés et polis, prêts à être enrobés, ayant une sphéricité comprise entre 0,88 et 0,92 et présentant des taches de poussière visibles au microscope à un grossissement de 15x.

10. Matériau granulaire poli et enrobé pouvant être obtenu par le procédé selon l'une quelconque des revendications 1 à 8.

11. Matériau de KCl enrobé et poli selon la revendication 10, ayant un enrobage dans une quantité de 6 pph ou moins et une diffusion d'environ 18 % ou moins à 7 jours, mesurée par un essai de lixiviation de l'eau à 21 °C, de préférence environ 15 % ou moins, dans lequel l'essai de lixiviation de l'eau est effectué comme décrit dans la description.

12. KCl compacté enrobé et poli ayant une sphéricité comprise entre 0,88 et 0,92 et ayant une quantité d'enrobage de 6 pph ou moins et une diffusion d'environ 18 % ou moins au jour 7, mesurée par un essai de lixiviation de l'eau à 21 °C, de préférence environ 15 % ou moins, dans lequel l'essai de lixiviation de l'eau est effectué comme décrit dans la description.

13. KCl compacté enrobé et poli selon la revendication 12, ayant une ou plusieurs des propriétés de diffusion suivantes : une diffusion à 10 jours d'environ 20 % ou moins, de préférence d'environ 15 % ou moins ; et/ou une diffusion à 30 jours de 40 % ou moins, de préférence de 35 % ou moins ; et/ou une diffusion à 50 jours de 50 % ou moins, de préférence de 45 % ou moins.

14. KCl compacté enrobé et poli selon l'une quelconque des revendications 10 à 13, dans lequel le KCl compacté enrobé et poli a un d50 compris entre 3 et 4 mm et un d90 inférieur à 5,5 mm.

15. Utilisation d'un dispositif de type mélangeur intensif constitué d'un récipient et d'au moins un ensemble d'éléments agitateurs tournant par rapport à des éléments statiques dans ledit récipient, pour le polissage à sec d'un matériau granulaire de KCl, dans laquelle le matériau granulaire a une sphéricité inférieure à 0,87 avant le polissage et une sphéricité comprise entre 0,88 et 0,92 après le polissage, dans laquelle la sphéricité (SPHT) est mesurée à l'aide d'un appareil RETSCH Camsizer et étant définie comme

$$\mathrm{SPHT} = 4\,\frac{\pi A}{p^2}$$

où p est le périmètre mesuré d'une projection de particules et A est la zone couverte par une projection de particules.

Figure 1

A

B

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3223518 A
- US 3285223 A
- US 4772490 A
- US 7722696 B
- CN 101381263

**Non-patent literature cited in the description**

- **LU et al.** *Sci Rep,* 2020, vol. 10, 5763